(19)

Europäisches
Patentamt

European
Patent Office

Office européen
des brevets

(11) **EP 4 488 908 B1**

(12) **EUROPEAN PATENT SPECIFICATION**

(45) Date of publication and mention
of the grant of the patent:
**01.10.2025 Bulletin 2025/40**

(21) Application number: **23020336.6**

(22) Date of filing: **05.07.2023**

(51) International Patent Classification (IPC):
*G06Q 20/06* (2012.01)     *G06Q 20/36* (2012.01)
*G06Q 20/40* (2012.01)

(52) Cooperative Patent Classification (CPC):
**G06Q 20/065; G06Q 20/36; G06Q 20/4016;
G06Q 20/405**

(54) **SECURE TRANSACTION UNIT, SERVICE PROVIDER UNIT AND ELECTRONIC PAYMENT TRANSACTION SYSTEM**

SICHERE TRANSAKTIONSEINHEIT, DIENSTANBIETEREINHEIT UND ELEKTRONISCHES
ZAHLUNGSTRANSAKTIONSSYSTEM

UNITÉ DE TRANSACTION SÉCURISÉE, UNITÉ DE FOURNISSEUR DE SERVICES ET SYSTÈME
DE TRANSACTION DE PAIEMENT ÉLECTRONIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**08.01.2025 Bulletin 2025/02**

(73) Proprietor: **Giesecke+Devrient advance52 GmbH
81677 München (DE)**

(72) Inventor: **Bohn, Markus
81677 München (DE)**

(74) Representative: **Giesecke+Devrient IP
Prinzregentenstraße 161
81677 München (DE)**

(56) References cited:
**CN-A- 110 851 891       KR-A- 20100 131 860
KR-A- 20100 132 764     KR-A- 20170 033 810
US-A1- 2010 216 429     US-A1- 2015 358 353**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to a secure transaction unit. The invention also relates to a service provider unit. The invention also relates to an electronic transaction system in particular an electronic payment transaction system.

Tokens - also referred to as digital assets, electronic coins, coin data sets - may represent any digital asset, in particular a digital currency, preferably a central bank digital currency, short CBDC. These tokens are issued and deleted by an issuing unit of the payment transaction system, such as an issuing authority, or a central bank unit or a commercial bank unit, hereinafter also referred to as secure token issuing unit.

Electronic token transactions and/or storage of tokens and any associated transaction data and/or storage data in an electronic payment transaction system must be safe and secure and so, means for protecting confidentiality, integrity, and availability of exchanged and/or stored token data must be implemented. This is especially true for electronic payment transactions and associated payment transactions and payment storages in which a monetary value is linked with each token.

Secure transaction units may be stolen or may be lost. Tokens that are hosted by such lost or stolen secure transaction unit, e.g. tokens that locally reside in such a secure transaction unit, remain valid in the electronic transaction system. Since the owner of the token is unable to access the tokens, he may suffer a significant monetary (financial) damage, because the (monetary) value represented by the tokens is blocked due to inaccessibility. In addition, in case the transaction unit is stolen, a thief may use the tokens to perform transactions as a fraud.

It is known that transaction units may for the purpose of data redundancy store copies of the token from their storage unit in another storage unit, such as an external USB flash drive or an online storage (cloud storage). Since copies of tokens would be a security risk in the transaction system, complex encryption schemes are necessary to secure the copies and complex system management steps are required to support the use of copies in such cases.

KR 10 2010 0131860 A discloses the preamble of claim 1. A payment terminal deducts the remaining electronic money balance from a card in response to a recovery request from a server and the payment terminal deposits the money to an account of the user.

So, there is a need that valid tokens can be accessed in cases where the transaction unit is stolen or is lost. It is important that token elements of the tokens are not revealed to the public to ensure data protection and data integrity as well as security within the transaction system. In addition, a fraud should be detectable when a payment is performed with a stolen transaction unit. However, anonymity in the transaction system must be always ensured and must not be reduced. It should also be possible that tokens of a stolen or lost transaction unit are recovered without reducing anonymity to avoid a financial damage to the participant to whom the transaction unit is assigned.

The above-identified objectives are solved with the features of the independent patent claims. Further advantageous embodiments are described in the dependent patent claims.

In an aspect of the present invention there is provided a secure transaction unit in an electronic transaction system, e.g., in an electronic payment transaction system. The secure transaction unit may be referred to as secure wallet. The secure transaction unit is a hardware transaction unit, such as a secure element, a smartcard or a hardware security module. In an embodiment, the secure hardware transaction unit is a secure element that is operatively connected to an electronic terminal device of a participant in the electronic transaction system. It is built in hardware to enable tamperproof and secure access to tokens residing therein.

The secure transaction unit comprises storage means for storing one or more token. So, the one or more tokens locally reside in the secure transaction unit which means that the tokens are physically stored in the secure transaction unit. The storage means may be referred to as token storage and is a physical entity. The token storage may be a token vault of this secure transaction unit. Each secure transaction unit in the transaction system may comprise its own token storage. From such token storage accessible by control means of the secure transaction unit, each token can be transferred to any other secure transaction unit, e.g., owned by a customer of the secure transaction unit.

The tokens are managed by the secure transaction unit, which may be seen as tokens that reside in a storage unit of that secure transaction unit, or that are owned (possessed) by a participant to which that secure transaction is uniquely assigned. The token may be an asset token. The token may be a currency token. The token may be a central bank issued token, such as a CBDC. The token may be a digital currency token from other commercial issuers.

The secure transaction unit further comprises control means that is configured to establish an online communication with a central unit of the electronic payment transaction system. This establishing of the online communication may be initiated by an online transaction in which tokens of the secure transaction unit should be transferred to another secure transaction unit within the transaction system or to request registration data from the central unit or to forward protocol data related to transactions to the central unit.

An online communication may be defined as a communication via classical internet or mobile communication means or any other suitable online communication protocol. Online communication comprises any sort of communication connection with an entity that is remote from the transaction unit, for instance via an internet link using TCP, IP, HTTP, HTTPS or any comparable sort of communication. It excludes short range offline communication, such as near field communication, Bluetooth, etc.

The control means is further configured to receive a blacklist-status in response to the established online communication. This blacklist-status-response should be received immediately after establishing the communication with the central unit. It may be the first response after establishing the communication link. This response should be provided before another request, such as a registration request or a protocol data report (for instance a request to enter protocol data) from that transaction unit is finally proceeded within the transaction system.

A secure transaction unit identifier that is also referred to as wallet-ID that may be unique in the electronic payment system may be provided with the blacklist-status-response.

A blacklist within this disclosure is a list of transaction units that are reported as being stolen or as being lost. The transaction unit having a blacklist-status "fulfilled" is also referred to as a backlisted secure transaction unit. Such a blacklisted secure transaction unit is flagged or indicated as not being a partner in a payment transaction. In other words, a backlisted secure transaction unit should not be used for payment transactions.

A blacklist-status represents a status of the transaction unit within the blacklist. The blacklist-status can either be fulfilled, which means that the transaction unit has been reported as being stolen or lost. Alternatively, the blacklist-status can be not-fulfilled, which means that the transaction unit has not been reported as being stolen or lost.

The report whether a transaction unit is stolen or lost may be provided by the participant that is assigned to the transaction unit. The request may be initiated by that participant to which the transaction unit is (uniquely) assigned. The request may indicate the loss of the transaction unit. The report whether a transaction unit is stolen or lost may alternatively be provided by a third person that found the transaction unit.

Each transaction unit within the transaction unit may comprise a blacklist-status. This blacklist-status may be initiated with "not-fulfilled" status as long as no report whether the transaction unit is stolen or lost is received in the transaction system.

To enter a transaction unit into the blacklist and/or to change a blacklist-status for a particular transaction unit from "not-fulfilled" to "fulfilled", a unique identifier of the transaction unit, such as a wallet-ID, or a chip-ID, or a card-ID, or a serial-number or any other suitable data for uniquely identifying the transaction unit may be used. Preferably, this unique identifier is also reported when reporting the lost or stolen transaction unit.

A secure transaction unit identifier may be used that is also referred to as wallet-ID that may be unique in the electronic payment system.

When changing the blacklist-status, a timestamp may also be entered in the blacklist. So, it may be protocolled the time at which the transaction unit is considered as stolen/lost and so, token that are transferred after that timestamp-data may be recovered.

So, a blacklist may comprise a unique identifier, a blacklist-status and preferably a timestamp at which the blacklist-status was changed last time.

Additionally the blacklist may contain a blacklisting secret, such as a secret number or a key or a PIN. This secret may only known by the owner of the transaction unit. To prevent any fraud with intentionally blacklisting transaction units, which are not stolen or lost, the reporter of the request to insert a transaction device into the blacklist also needs to provide this secret. The blacklisting secret may be checked in the secure transaction unit and/or a central unit. The transaction unit and/or the central unit only initiates subsequent actions, if it verifies the secret.

The control means is further configured to automatically transmit all tokens that are currently stored in the storage means to an online hosted target secure transaction unit if the blacklist-status is fulfilled. The blacklist-status is fulfilled in a case in which this transaction unit is entered in the blacklist which means that this transaction unit is reported as being stolen or as being lost.

Currently stored tokens are all tokens that reside in the storage means at the time of receipt of the blacklist-status. Alternatively, currently stored tokens may be all tokens that - since the time of reporting that the transaction unit is lost or stolen - are owned by the transaction unit.

The transmitting occurs automatically. This means that it may occur without any userinteraction or user-input or user-acceptance. This may also mean that the transmitting of all the tokens occurs without undue delay, e.g. in case a theft recognizes that all tokens will be transferred from the transaction unit.

The automatic transmitting is also referred to as homecoming mechanism.

After transmitting all the tokens to the online hosted target secure transaction unit, the locally stored tokens are physically deleted from the storage unit.

An online hosted target secure transaction unit may be a software secure transaction unit, e.g. a secure wallet, that is hosted as a software application in the central unit, e.g. at a service provider unit. The service provider unit may be the issuer of the hardware secure transaction unit. The service provider unit may be the manager of the hardware secure transaction unit.

The online hosted target secure transaction unit may be an online representation of the hardware secure transaction unit, e.g. it may be owned by the same participant to which the hardware secure transaction unit is uniquely assigned.

The online hosted target secure transaction unit may be a secure transaction unit of the service provider unit itself, e.g. the manager and/or the issuer of the hardware secure transaction unit. The online hosted target secure transaction unit may be operated as an escrow transaction unit, which transfers the tokens to a (new) transaction unit of the owner of the blacklisted transaction unit.

With this aspect it is now possible that a lost or stolen secure hardware transaction unit does not necessarily mean that a financial damage occurs. Tokens that are stored in the secure hardware transaction unit.

The secure hardware transaction unit is now blacklisted - meaning it has the blacklist-status "fulfilled". If a lost and blacklisted transaction unit eventually establishes an online communication, it transfers all tokens to an online secure transaction unit. This transfer will proceed automatically and without user approval.

In other words: If the transaction unit is lost or stolen (not destroyed), the transaction unit might eventually get online. In this case, the transaction unit is informed that it was put on a blacklist. This information triggers the transaction unit to send all the token (money) to a predefined transaction unit.

In a preferred embodiment, the blacklist-status is received as a command from the central unit, wherein based on the received command, the automatically transmitting is directly initiated. In such a case, the central unit already checked the blacklist and identified the blacklist-status and the transaction unit immediately starts the token transfer based on a dedicated command.

In an embodiment, the command further comprises information about the online target secure transaction unit to which all tokens are automatically transmitted. So, the central unit knows the address of the target online transaction unit and it triggers the transaction unit to send all the token (money) to this predefined transaction unit. Preferably however, the online target secure transaction unit is (pre-) stored in the transaction unit, e.g. as a data element pre-defined by the issuer or the owner of the transaction unit.

In a preferred embodiment, the blacklist-status is received as an information (e.g. as a data) from the central unit. In this case, the control means is further configured to check the information whether the blacklist-status is fulfilled. If the blacklist-status is fulfilled, the control means is further configured to generate a command to initiate the automatically transmitting. Upon receipt of the information at the transaction unit, the transaction unit initiate the transfer of token (homecoming mechanism) in case the secure transaction unit has a fulfilled blacklist-status.

Each transaction unit may automatically - upon online communication establishing - request the information about the blacklist-status.

This may be implemented as an additional security-step in the token transaction process. Upon online communication establishing, the transaction unit will immediately and always receive the information about its blacklist-status and/or it will look up the blacklist and initiate the automatic token transmittal in case this secure transaction unit identifies (checks) itself on the blacklist or the blacklist-status "fulfilled".

The secure transaction unit further comprising information about the online target secure transaction unit to which all tokens are automatically transmitted, wherein prior the automatically transmitting, the control means is further configured to retrieving this information. E.g. the information is included as a predefined address within the secure transaction unit. Due to the high security level of the secure transaction unit, any manipulation to transfer the tokens can be avoided.

In a preferred embodiment, the secure transaction unit is uniquely assigned to a participant of the electronic transaction system. The online target secure transaction unit is a transaction unit that is assigned to the same participant. The online target secure transaction unit is preferably hosted at a service provider unit (e.g. as the central unit) within the electronic transaction system.

In a preferred embodiment, the secure transaction unit further comprises transceiver means for directly transferring of tokens with other secure transaction units of the electronic transaction system to cause an exchange of the one or more tokens between secure transaction units in the electronic transaction system. The transceiver means may be local communication means for short-range communication, such as NFC or Bluetooth. So, direct offline token transaction between two secure wallets (e.g. residing in secure elements), e.g. the secure wallet that initiates the token transfer (payer) and/or the secure wallet that receives a token (payee), is possible. There is no access needed or it is not possible to communicate with remote instances of the transaction system, such as a token register, a transaction register, a token issuing unit and/or a service provider unit, such as financial service provider (FSP) via classical internet or mobile communication means. The token transfer may then take place by local wireless communication means, such as Bluetooth, NFC, or any other suitable wireless communication protocol. The token transfer may also take place by contact-based communication means, such as USB, ISO 7816, or any other suitable contact-based communication protocol.

In a preferred embodiment, the secure transaction unit further comprises means for transmitting one or more registration requests to a token reference register of the electronic transaction system as the central unit, wherein each registration request comprises one or more token references, each token reference being uniquely assigned to a token in the electronic payment transaction system. Here, each token may comprise a monetary value and a private key of the token-individual key pair as token-individual token elements. One or more token references may comprise the monetary value of the assigned token and a public key corresponding to a private key of the token-individual key pair. So, the unique assignment between token and token reference is the token-individual key pair.

The control means of the secure transaction unit is further configured to generate one or more token references of a registration request based on modification commands (replacement requests) being processed by the secure transaction unit, the modification commands being preferably one or more of a switch-command, a merge-command and a split-command, wherein the modification commands are only performed for tokens having the same token-type information. For further details related to these modification commands it is referred to WO 2020 / 212 331 A1 and WO 2020 / 212 331 A1.

In a preferred embodiment, the control means are further configured to generate protocol data related to payment transactions performed between the secure transaction unit and other secure transaction units. The protocol data being sent to a protocol data register in the electronic payment transaction system as the central unit. The protocol data may be used for a surveillance of (payment) transactions within the electronic transaction system, wherein the protocol data and/or the registration requests are used for fraud detection. A comparison between protocol data and registration requests is made and based on a data reduction scheme, fraud may be detected. So, an efficient and anonymous payment system surveillance system can be achieved.

The protocol data is per se independent on the registration requests. This means, offline and online transaction may lead to a token reference register status that is not following the status of the payment system. Using the protocol data with the transaction unit group identifier enables to receive additional information that is more accurate than the token reference register status.

In another aspect there is provided a service provider unit as a central unit in an electronic transaction system.

The service provider may be a financial service provider unit. The financial service provider unit may be configured to issue and/or manage at least the one of a plurality of secure transaction units.

The service provider unit comprises one or more online hosted target transaction units (as described above) that comprise a storage means for storing one or more token, preferably upon receipt from a secure transaction unit as previously described.

The service provider unit comprises a service provider transaction unit that is configured to receive all tokens that are stored in a storage means of a secure transaction unit as discussed above.

In a preferred embodiment, the service provider unit may further comprise a blacklist-register for registering a blacklist-status of respective transaction units. The blacklist register may be a storage unit in which the blacklist resides. Here, the blacklist-register may be a part of the service provider unit.

In a preferred embodiment, the transaction units are registered based on a unique identifier of the transaction unit. The transaction units are preferably managed and/or issued by the service provider unit.

In another aspect there is provided an electronic transaction system that comprises a plurality of secure (hardware) transaction units as described above.

The electronic transaction system further comprises one or more service provider units as described above.

The electronic transaction system further comprises a central unit. In a preferred implementation, the central unit is one of the service provider units. The central unit is configured to establish an (the) online communication with one of the plurality of transaction units. The central unit is further configured to transmit a blacklist-status in response to the established online communication to the one of the plurality of transaction units.

In a preferred embodiment, the central unit is further configured to request the blacklist-status from a blacklist register of the electronic transaction system.

The blacklist register may be a centralized blacklist register within the electronic transaction system. So, each blacklist-status of transaction units is reported and protocolled in one register within the transaction system. Each entity of the transaction system should have access to the blacklist register to read out blacklist-status of individual transaction units.

The blacklist register may be a blacklist register of one or more service provider units issuing and/or managing the one of the plurality the secure transaction unit. In one implementation, each service provider unit hosts its own blacklist register in which only blacklist-status of transaction units are registered that are issued or managed by the service provider unit.

The central unit is further configured to upon receiving the blacklist-status from the blacklist register, generating, by means of a command-generator, a command for automatically transmitting all tokens that are currently stored in a storage means of the one of the plurality of transaction units to an online hosted target secure transaction unit, if the blacklist-status is fulfilled

Preferably, the command further comprises information about the online target secure transaction unit to which all tokens are automatically transmitted.

The central unit of the transaction unit is for instance a service provider unit providing one or more services for the one of the plurality of transaction units. The service(s) may be a payment transaction service or a digital asset management service or the like.

The central unit of the transaction unit is for instance a service provider unit issuing the one of the plurality of transaction units.

The central unit of the transaction unit is for instance a token issuer unit. This may be a central bank with a payment transaction system. The secure token issuer unit may comprise a minting unit configured to generate a new token to be issued in the electronic transaction system; and a melting unit configured to delete tokens to be deleted from the electronic transaction system.

The central unit of the transaction unit is for instance a blacklist-register. So, each online communication initiated by a transaction unit may be with a blacklist-register (first).

The central unit of the transaction unit is for instance a certificate revocation register. Here, certificates of transaction units that are revoked - e.g. due to a blacklist-status "fulfilled" - are registered and can be reviewed. It may be a second instance which verifies the blacklist-status of a transaction unit.

The central unit of the transaction unit is for instance one or more token registers for registering tokens in the electronic transaction system. The token reference register may comprise one or more storage units for storing token references for registering tokens in the electronic payment transaction system. Each stored token reference in the token reference register may comprise the monetary value of the token and a public key corresponding to the private key of the token-individual key pair. The token reference register may further comprise one or more verification units for verifying whether the token reference of a receive registration request is stored in the token reference register. Each token reference may be uniquely assigned to a token.

The central unit of the transaction unit is for instance one or more protocol data registers for storing protocol data of transactions performed between secure transaction units.

A blacklist-status may be changed upon request from a participant to which the one of the plurality of transaction units is uniquely assigned, wherein the blacklist-status is fulfilled, if the one of the plurality of transaction units is stolen or is lost.

In a further aspect there is provided a method for automatically transmitting of all token from a blacklisted secure transaction unit to an online hosted transaction unit by means as described above.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.

Fig. 1 shows an exemplary embodiment of a transaction system according to the invention.

Fig. 2 shows another exemplary embodiment of a transaction system according to the invention.

Fig. 3 shows another exemplary embodiment of a transaction system according to the invention.

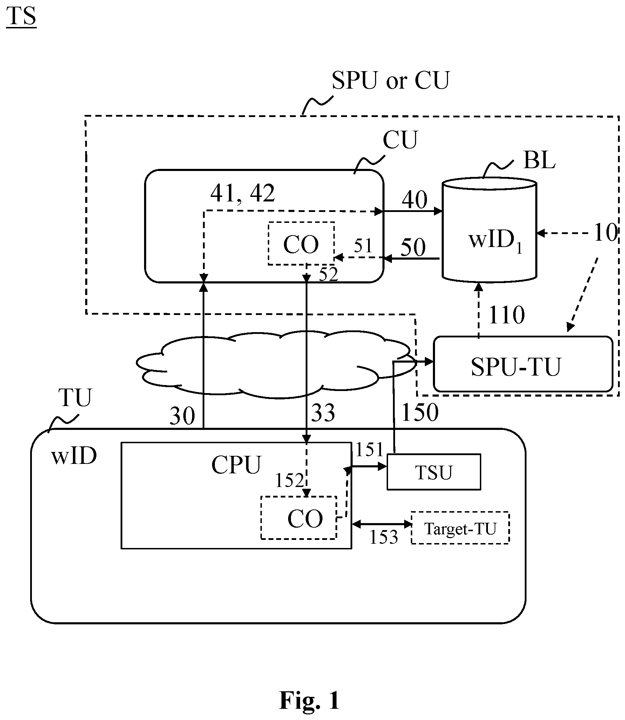

Fig. 1 shows an exemplary embodiment of a transaction system TS according to the invention. The system TS comprises a secure hardware transaction unit TU. TU is uniquely identified in the TS with a unique identifier wID. The wID may be a wallet-ID or a serial number or a chip-ID of the TU.

The TU comprises a storage unit TSU. The TSU comprises one or more token. The tokens are stored in the TSU. The TU also comprises a control means CPU.

The system TS also comprises a central unit CU. The CU can be reached by the TU via online communication 30. Here, the online communication is an internet communication using TCP, IP, UDP, HTTP or HTTPS protocols. Any other suitable protocol can be used, too.

The system TS also comprises a blacklist register BL. In the BL, a blacklist is stored. The blacklist comprises a blacklist-status of each TU in the TS and so, the BL in this embodiment is a central BL of the TS. The BL is shown as an individual part of the TS. In other implementations, the BL is part of the CU.

The system TS also comprises a service provider unit SPU. The SPU may be a financial service provider FSP. The SPU may be the manager and/or issuer of the TU. The SPU comprises a target online transaction unit SPU-TU.

As shown with dashed lines, the CU, BL and SPU-TU may all be part of the SPU that then may represent the CU.

It is assumed that a participant lost the TU. In the TU, some token are physically stored. The token represent money and so, the participant reports the loss of TU at the BL in step 10. With the reporting 10, the participant provided the unique identifier wID.

In an alternative scenario, the participant reports the loss of TU at the SPU in step 10. The SPU as an issuer of the TU knows the participant. With the "know-your-costumer" approach, the SPU is able to register the loss in the BL in step 110.

The reporting 10 may be done via a web-portal. Upon reporting, the BL changes a blacklist-status to "fulfilled" which means that the TU is now blacklisted (considered as a stolen TU or lost TU).

In the following, a method for automatically transmitting tokens T is described according to Fig. 1.

The TU establishes an online communication 30. This may be caused by a theft of the TU that wants to make an online transaction or wants to register tokens at a token reference register or wants to protocol a transaction. The TU may have to provide a unique identifier, such as wID, to establish the online communication 30.

The CU recognized the online communication in step 30 and immediately requests 40 a blacklist-status for the TU at the BL. The BL responses 50 the blacklist-status "fulfilled" to the CU.

In a first implementation, the CU receives the response in step 50 and provides it to a command-generator CO in step 51. The CO recognizes the blacklist-status "fulfilled" for that TU and generates a command for automatically transmitting all tokens from the TU to the online target SPU-TU. The address of the SPU-TU may be provided at the CU or the BL. In step 52, this command is provided to the TU. The TU receives the blacklist-status as the command in step 33. In this first implementation, upon receipt of the blacklist-status (as the command CO), the CPU automatically and directly initiates 151 the transfers all tokens from the TSU to the SPU-TU. The transfer is made in follow-up step 150. In an alternative of the first implementation, the Target-TU information is stored in the TU and upon receipt of the command in step 33, the CPU retrieves the information of the SPU-TU in step 153.

In a second implementation, the CU receives the blacklist-status-response in step 50 directly forwards it to the CPU of TU in step 33. The CPU checks the blacklist-status-response and provides it to a command-generator CO in step 152. The CO recognizes the blacklist-status "fulfilled" for that TU and generates a command for automatically transmitting all tokens from the TU to the online target SPU-TU. The address of the SPU-TU may be provided from the CU or the BL. Alternatively, the address of the SPU-TU is retrieved in step 153 from the TU itself. In this second implementation, the CPU initiates 151 the transfers all tokens from the TSU to the SPU-TU. The transfer is made in follow-up step 150.

As a result of both implementations, all tokens stored in the TSU are transferred to the SPU-TU.

In other words: If the participant loses his TU or it is stolen from him, tokens in the TSU are lost as well. In step 10, the TU is blacklisted, preferably at the SPU directly. If the lost and blacklisted TU goes online in step 30, it receives in step 33 a "transfer all tokens to SPU-TU" command from the CU (or the SPU) that has checked the blacklist-status. Alternatively, the TU itself checks the blacklist and starts this transfer in step 150.

The SPU-TU is an online wallet and this is predefined in the TU or the CU for that participant. The respective online-wallet-ID may be prestored in the TU or the CU. The transfer 150 will proceed automatically without any user approval or user interaction.

The TU is blacklisted, e.g. entered in a list ("blacklist") centrally at the BL or CU by means of the SPU or the CU. Alternatively, the blacklisting of the TU is made only at the SPU that issued the TU.

The SPU-TU-ID (online-wallet ID) is stored in the TU OR in the BL. The SPU-TU is the target to which all tokens T from the TSU of the TU are to be transferred (forcibly/automatically) as soon as the TU goes online in step 30.

If the blacklisted TU contacts a system component (i.e., CU or SPU or T-Reg or P-Reg), i.e., if the theft (participant) wants to execute an online transaction, retrieve (registry) data TR from the TS, or save (PROT) data to the TS.

The TS OR the TU checks the blacklist-status. If the blacklist-status is "not fulfilled", everything remains in normal operation. If the blacklist-status is "fulfilled", the automatic token transfer will be made in step 150 and the token are stored in the SPU-TU (target online wallet).

The SPU-TU is preferably an online wallet of the owner of the TU.

THE SPU-TU may alternatively be a TU of the TS, like the SPU or TU issuer. Tokens are received in step 150 and cached in a waiting period and only later credited/transferred to the participants (new) wallet.

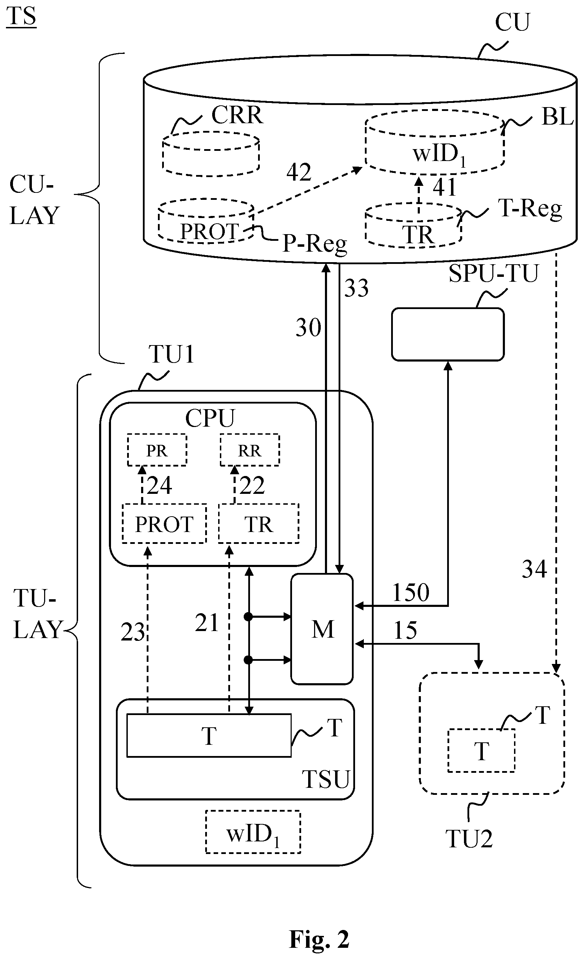

Fig. 2 shows another exemplary embodiment of a transaction system TS according to the invention. All elements that are identical with elements of Fig. 1 have the same reference sign.

The transaction system TS comprises a central unit layer CU-LAY in which a central unit CU is arranged. The TS further comprises a direct transaction layer TU-LAY in which a plurality of transaction units TU may be provided, as an example, two transaction units TU1 and TU2 are shown in Fig. 2.

The transaction units TU of the transaction system TS are arranged to exchange 15 tokens T directly with each other. In the case of Fig. 2, the tokens T are payment tokens, which are also referred to as digital coins. Each token T may be issued by a transaction unit TU-I of a specific token issuer (not shown in Fig. 2).

Each token T can be modified, such as split, merged or switched, by applying modification-commands by each transaction unit TU. Each token T can be generated by a transaction unit TUI of a token issuer and can also be deleted. Each modification can be registered in a T-Reg (as part of the CU) by replacement requests (registration commands) RR.

A transaction unit TU comprises a storage means (vault) TSU as a token memory.

For each token T, a token reference TR can be stored in the token reference register T-Reg. The token reference TR of the token T can be viewed at any time in the register T-Reg of the transaction system TS.

This token reference TR can be sent to the token reference register T-Reg in form of a registration request RR (being generated in step 22), if necessary, together with a modification command regarding the token T.

This registration request RR is received in the token reference register T-Reg. After the registration request RR has been checked by the token reference register T-Reg, the token reference TR is stored in the token reference register T-Reg, whereby the token T is registered in the transaction system TS and an old token reference TR is deleted from the token reference register T-Reg.

This token reference TR are uniquely assigned to the token T. The TR is used to register the token T in the transaction system TS. The token reference TR are therefore the public representation of the token T from the transaction layer TU-LAY. Sole knowledge or possession of the token reference TR alone does not allow the token T to be transferred and is not equivalent to the TU1 being in possession of the token T. The token reference TR is used to prevent multiple spending attempts and checks whether token values have been generated in an improper manner. Therefore, the token reference TR and, if applicable, the history about the tokens T and the corresponding registration requests RR from TU(s) are stored in the token reference register T-Reg.

The tokens T are stored, for example, in a secure wallet, as the TU. A wallet may be set up as an application on a smart card. The wallet is used to securely manage tokens T of the TU, generate token references TR, modify tokens T, and/or exchange tokens T. Wallets are used to communicate with the token reference register T-Reg, generate registration requests RR to the token reference register T-Reg, modify tokens T (switch, merge, split) and/or perform transaction of token T to another TU.

A transaction with a TU does not require a communication link to the token reference register T-Reg of the transaction system TS. The transaction system TS is set up to perform a transaction offline, i.e., without a communication link to the token reference register T-Reg. A corresponding registration of token T may therefore be temporally downstream of a transfer of token T to a TU.

The token reference register T-Reg is a unit of the transaction system TS and is either a central register or database of the transaction system TS or a decentralized register or database (DLT) of the transaction system TS.

The TU1 may be issued or operated by a service provider unit SPU. TU1 may generate 21 the TR by its CPU. The CPU generates the RR in step 22.

The token T may be transferred 15 from TU2 during a payment transaction. TU1 now generates a TR in step 21 as known from WO 2020 / 212 331 A1 and WO 2020 / 212 331 A1 and it is not further repeated here.

The payment transaction between TU1 and TU2 may also be protocolled with protocol data PROT. The PROT may include a wID of the TU1 and/or a wID of the TU2 and this PROT may be provided as PR (generated in step 24) to the P-Reg of the CU and may be stored there. The PROT may include a timestamp of the transaction of T between TU1 and TU2 and respective TR.

In the following, a method for automatically transmitting tokens T is described according to Fig. 2.

The TU1 establishes an online communication 30. This may be caused by the TU1 that wants to register 31 tokens at the T-Reg or wants to protocol 32 the PR at the P-Reg.

The CU recognized the online communication in step 30 and immediately requests a blacklist-status for the TU at the BL in step 41 (if a RR is sent) or 42 (if a PR is sent). The BL responds the blacklist-status "fulfilled".

The TU1 receives the blacklist-status-response in step 33. The CPU of TU1 checks the blacklist-status-response and generates a command for automatically transmitting all tokens from the TU1 to the online target SPU-TU. The address of the SPU-TU is prestored in the TU1 or may be provided by the BL. The CPU initiates the transfer of all tokens from the TSU to the SPU-TU in step 150 via the transceiver means M.

As a result of both implementations, all tokens stored in the TSU are transferred to the SPU-TU.

Optionally, a certificate of the TU is also revoked and entered in certificate revocation list, CRL, of a certificate revocation register CRR. The CRL entry at the CRR prevents transactions with other TU which need to check the CRR for an CRL-entry of that TU.

The online target wallet SPU-TU will ignore the CRL entry in the CRR, so deliberately executes this token transfer in step 150 despite of it.

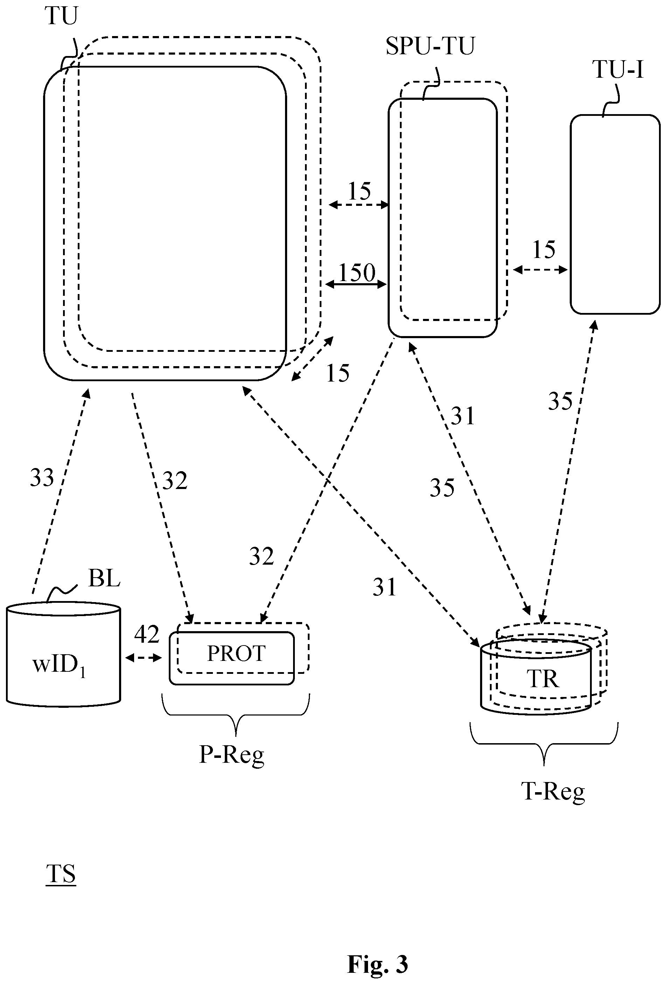

In Fig. 3, another TS is shown.

In Fig. 3, it is indicated that a plurality of transaction units TU of service provider units SPU (here referred to as SPU-TU) can be existing in the TS. These SPU-TU may receive new tokens T from a token issuer TU-I e.g., a central bank. Tokens may be newly issued or may be deleted in the TU-I.

These new tokens may be issued to the intermediate issuers, such as commercial banks SPU-TU. These tokens may be used in direct token exchange 15 with costumers of the intermediate issuers SPU. The token exchange 15 is also performed between TUs, e.g. between TU1 and TU2 as shown and described in Figs. 1 and 2.

In Fig. 3 it is shown that a plurality of token reference registers T-Reg may be used in the TS to accelerate the storing of a plurality of token references TR.

In Fig. 3 it is also shown that a P-Reg is used to store PR. These PR in the P-Reg may be used together with the RR in the T-Reg to enable a surveillance system and/or a lostcard-recovery.

The PROT may be generated per each payment transaction in which T is transferred in the TU-LAY. The PROT may include one or more data fields. PROT are provided in one of the following formats:

$$PROT = (wID1, wID2, TR_{new})$$

$$PROT = (wID1, wID2, TR_{new}, TR_{old})$$

$$PROT = (wID1, wID2, v)$$

$$PROT = (hash(wID1), hash(wID2), v)$$

$$PROT = (hash(wID1), (hash(wID2), TR_{new}, TR_{old})$$

The wID1 is a unique TU identifier of the TU1. The wID2 is a unique identifier of the TU2.

Instead of the wID, a hash function may be applied on the wID and only the resulting hash value may be inserted into the PROT.

In addition, a transaction number may be inserted in the PROT as well. One or more of the data fields of the PROT may be encrypted to increase the security within the TS.

Furthermore, T-Reg manages the storage location for the token references TR, shown here as database 1 as an example of a storage unit 1 in the token reference register T-Reg. As a representative example, the TR for the token T of the SPU-TU is entered in the database 1 upon replacement request 31.

If a token reference TR is not yet known in the token reference register T-Reg, it is added.

The commands CO used for RR can be modifications of an existing token T, for example "switch", "split" or "merge" that are used in replacement requests 31. The commands "switch", "merge" and "split" can be integrated into replacement requests (registration requests RR) to register a modification of a token T at the T-Reg.

The evaluation result of PR or PR and RR may be that certain TRs are TRs of the TU.

The evaluation result of PR or PR and RR may also be that there are no TRs or that TRs cannot be determined. In this case, P-Reg and/or a T-Reg would have to have suitable data for the evaluation, e.g. a TR specification and wallet ID in the PROT and/or the PROT and RR data set. P-Reg and/or a T-Reg optionally filter internally its data and then evaluates whether there are TRs using its data.

REFERENCE SIGNS

| | |
|---|---|
| TS | Electronic (payment) transaction system |
| TU | Secure transaction unit in TS, wallet |
| | TSU Token storage unit |
| | CPU Control unit |
| | M Transceiver means |
| TU-O | Online hosted secure transaction unit in TS, online wallet |
| SPU | Service Provider Unit, FSP |
| SPU-TU | Transaction unit of SPU, SPU-wallet |
| CU | Central unit |
| | T-Reg Token Reference Register |
| | P-Reg Protocol Data Register |
| | BL Blacklist-Register |
| | CRR Certificate Revocation Register |
| CO | Command-Generator |
| CU-LAY | Central Unit layer |
| TU-LAY | Token transfer layer |
| RR | Registration request, replacement request |
| PR | protocol data report |
| T | Token |
| TR | Token reference |
| PROT | Protocol data |
| wIDx | Identifier of TUx |
| 10 | Report loss |

110 Register loss
Offline transfer of Token
150 Automatic transfer all token
151 Directly or indirectly initiate transfer
152 Check Blacklist-Status
153 Retrieve target TU address (online wallet)
21 Generate Token reference
22 Generate Registration request
23 Generate log-data
24 Generate log-data request
30 Online communication
31 Transmit TR
32 Transmit LDR
33 Receive Blacklist-Status
34 Online Transfer of Token
35 Register new Tokens, Delete old Tokens
40 Request Blacklist-Status
41 Part of RR-process
42 Part of PR-process
50 Response Blacklist-Status
51 Provide response to CO of CU
52 Provide command

**Claims**

1. A hardware secure transaction unit (TU) in an electronic transaction system (TS), the hardware secure transaction unit (TU) comprising:

   storage means (TSU); and
   control means (CPU) configured to:

   - establishing (30) an online communication with a central unit (CU) of the electronic payment transaction system (TS); and
   - receiving (33) a blacklist-status in response to the established online communication;
   - automatically transmitting (150) data, if the blacklist-status is fulfilled;

   **characterized in that**

   the hardware secure transaction unit (TU) is a secure element, a smart card or a hardware security module;
   the storage means (TSU) is configured for storing one or more token (T) of the electronic transaction system (TS), wherein in the electronic transaction system (TS) secure transaction units (TU) of the electronic transaction system (TS) exchange tokens (T);
   all tokens (T) that are currently stored in the storage means (TSU) are transmitted (150) as the data; and
   the tokens (T) are transmitted (150) from the hardware secure transaction unit (TU) to an online hosted target secure transaction unit (TU) of the electronic transaction system (TS).

2. The hardware secure transaction unit (TU) of claim 1, wherein the blacklist-status is received (33) as a command from the central unit (CU), wherein based on the received command, the automatically transmitting (150) is directly initiated (151).

3. The hardware secure transaction unit (TU) of claim 2, wherein the command further comprises information about the online target secure transaction unit (SPU-TU) to which all tokens (T) are automatically transmitted (150).

4. The hardware secure transaction unit of claim 1, wherein the blacklist-status is received (33) as an information from the central unit (CU), wherein the control means (CPU) is further configured to:

   - checking (152) the information whether the blacklist-status is fulfilled; and
   - if the blacklist-status is fulfilled, generating a command to initiate (151) the automatically transmitting (150).

**5.** The hardware secure transaction unit (TU) of any of the preceding claims, further comprising information about the online target secure transaction unit (SPU-TU) to which all tokens (T) are automatically transmitted (150), wherein prior the automatically transmitting (150), the control means (CPU) is further configured to retrieving (153) this information.

**6.** The hardware secure transaction unit (TU) of any of the preceding claims,
wherein the automatically transmitting (150) occurs without any further user interaction or user-input or user-acceptance.

**7.** The hardware secure transaction unit (TU) of any of the preceding claims,

- wherein the secure transaction unit (TU) is uniquely assigned to a participant of the electronic transaction system (TS),
- wherein the online target secure transaction unit (SPU-TU) is a transaction unit (TU) that is assigned to the same participant, the online target secure transaction unit (SPU-TU) is preferably hosted at a service provider unit (SPU) within the electronic transaction system (TS).

**8.** The hardware secure transaction unit (TU) of any of the preceding claims, further comprising:

- transceiver means (M) for directly transferring (15) of tokens (T) with other secure transaction units (TU) of the electronic transaction system (TS) to cause an exchange of the one or more tokens (T) between secure transaction units (TU) in the electronic transaction system (TS); and preferably
- means for transmitting one or more registration requests (RR) to a token reference register (T-Reg) of the electronic transaction system (TS) as the central unit (CU), wherein each registration request (RR) comprises one or more token references (TR), each token reference (TR) being uniquely assigned to a token (T) in the electronic payment transaction system (TS); and more preferably
- the control means (CPU) further configured to generate protocol data (PROT) related to payment transactions performed between the secure transaction unit (TU) and other secure transaction units (TU), wherein the protocol data (PROT) being sent (32) to a protocol data register (P-Reg) in the electronic payment transaction system (TS) as the central unit (CU).

**9.** A service provider unit (SPU) as a central unit (CU) in an electronic transaction system (TS) comprising:

- one or more online hosted target transaction units (TU-O) comprising a storage means (TSU) for storing one or more token (T);
- a service provider transaction unit (SPU-TU) configured to receiving (150) all tokens (T) that are stored in a storage means (TSU) of a hardware secure transaction unit (TU) according to any of the preceding claims.

**10.** The service provider unit (SPU) according to claim 9, wherein the hardware secure transaction unit (TU) is uniquely assigned to a participant of the electronic transaction system (TS),

- wherein the online target secure transaction unit (SPU-TU) is a transaction unit (TU) that is assigned to the same participant.

**11.** The service provider unit (SPU) of claim 9 or 10, further comprising a blacklist-register (BL) for registering a blacklist-status of respective transaction units (TU), the transaction units (TU) preferably being registered based on a unique identifier (wID) of the transaction units.; the transaction units (TU) more preferably being managed and/or issued by the service provider unit (SPU).

**12.** An electronic transaction system (TS) comprising:

- a plurality of hardware secure transaction units (TU) according to any of the preceding claims 1 to 8;
- one or more service provider units (SPU) according to any of the preceding claims 9 to 11;
- a central unit (CU), preferably being one of the service provider units (SPU), the central unit being configured to:

    - establishing (30) an online communication with one of the plurality of transaction units (TU);
    - transmitting (33) a blacklist-status in response to the established online communication to the one of the plurality of transaction units (TU).

13. The electronic transaction system (TS) of claim 12, wherein the central unit (CU) is further configured to:

- requesting (40) the blacklist-status from a blacklist register (BL) of the electronic transaction system (TS), wherein the blacklist register (BL) preferably being:

- a centralized blacklist register (BL) within the electronic transaction system (TS);
- a blacklist register (BL) of one or more service provider units (SPU) issuing and/or managing the one of the plurality the secure transaction unit (TU);

- upon receiving (50) the blacklist-status from the blacklist register (BL), generating, by means of a command-generator (CO), a command for automatically transmitting (150) all tokens (T) that are currently stored in a storage means (TSU) of the one of the plurality of transaction units (TU) to an online hosted target secure transaction unit (TU), if the blacklist-status is fulfilled,
- wherein preferably the command further comprises information about the online target secure transaction unit (SPU-TU) to which all tokens (T) are automatically transmitted (150).

14. The electronic transaction system (TS) of any of the preceding claims 12 to 13, wherein the central unit (CU) is at least one of the following:

- a service provider unit (SPU) providing one or more services for the one of the plurality of transaction units (TU);
- a service provider unit (SPU) issuing the one of the plurality of transaction units (TU);
- a token issuer unit;
- a blacklist-register (BL);
- a certificate revocation register (CRR);
- one or more token registers (T-Reg) for registering tokens (T) in the electronic transaction system (TS);
- one or more protocol data registers (P-Reg) for storing protocol data of transactions performed between secure transaction units (TU).

15. The electronic transaction system (TS) of any of the preceding claims 12 to 14, wherein a blacklist-status is changed upon request from a participant to which the one of the plurality of transaction units is uniquely assigned, wherein the blacklist-status is fulfilled, if the one of the plurality of transaction units (TU) is stolen or is lost.

**Patentansprüche**

1. Hardwaresichere Transaktionseinheit (TU) in einem elektronischen Transaktionssystem (TS), wobei die hardwaresichere Transaktionseinheit (TU) umfasst:

ein Speicherungsmittel (TSU) und
ein Steuermittel (CPU), das konfiguriert ist zum:

- Herstellen (30) einer Online-Kommunikation mit einer Zentraleinheit (CU) des Transaktionssystems (TS) für elektronische Zahlungen und
- Empfangen (33) eines Blacklist-Status als Reaktion auf die hergestellte Online-Kommunikation;
- automatisches Übertragen (150) von Daten, wenn der Blacklist-Status erfüllt ist;

**dadurch gekennzeichnet, dass**
die hardwaresichere Transaktionseinheit (TU) ein sicheres Element, eine Smartcard oder ein Hardwaresicherheitsmodul ist;
das Speicherungsmittel (TSU) zum Speichern eines oder mehrerer Token (T) des elektronischen Transaktionssystems (TS) konfiguriert ist, wobei im elektronischen Transaktionssystem (TS) sichere Transaktionseinheiten (TU) des elektronischen Transaktionssystems (TS) Token (T) austauschen;
alle Token (T), die aktuell im Speicherungsmittel (TSU) gespeichert sind, als die Daten übertragen (150) werden und
die Token (T) von der hardwaresicheren Transaktionseinheit (TU) an eine sichere Transaktionseinheit (TU) eines online gehosteten Ziels des elektronischen Transaktionssystems (TS) übertragen (150) werden.

2. Hardwaresichere Transaktionseinheit (TU) nach Anspruch 1, wobei der Blacklist-Status als ein Befehl von der Zentraleinheit (CU) empfangen (33) wird, wobei basierend auf dem empfangenen Befehl das automatische Übertragen (150) direkt initiiert (151) wird.

3. Hardwaresichere Transaktionseinheit (TU) nach Anspruch 2, wobei der Befehl ferner Informationen über die sichere Transaktionseinheit eines Online-Ziels (SPU-TU) umfasst, an die alle Token (T) automatisch übertragen (150) werden.

4. Hardwaresichere Transaktionseinheit nach Anspruch 1, wobei der Blacklist-Status als eine Information von der Zentraleinheit (CU) empfangen (33) wird, wobei das Steuermittel (CPU) ferner konfiguriert ist zum:

   - Prüfen (152) der Informationen darauf, ob der Blacklist-Status erfüllt ist; und
   - wenn der Blacklist-Status erfüllt ist, Erzeugen eines Befehls zum Initiieren (151) des automatischen Übertragens (150).

5. Hardwaresichere Transaktionseinheit (TU) nach einem der vorhergehenden Ansprüche, ferner umfassend Informationen über die sichere Transaktionseinheit eines Online-Ziels (SPU-TU), an die alle Token (T) automatisch übertragen (150) werden, wobei vor dem automatischen Übertragen (150) das Steuermittel (CPU) ferner konfiguriert ist, um diese Informationen abzurufen (153).

6. Hardwaresichere Transaktionseinheit (TU) nach einem der vorhergehenden Ansprüche, wobei das automatische Übertragen (150) ohne weitere Benutzerinteraktion oder Benutzereingabe oder Benutzerannahme erfolgt.

7. Hardwaresichere Transaktionseinheit (TU) nach einem der vorhergehenden Ansprüche,

   - wobei die sichere Transaktionseinheit (TU) eindeutig einem Teilnehmer des elektronischen Transaktionssystems (TS) zugewiesen ist;
   - wobei die sichere Transaktionseinheit eines Online-Ziels (SPU-TU) eine Transaktionseinheit (TU) ist, die demselben Teilnehmer zugewiesen ist, wobei die sichere Transaktionseinheit eines Online-Ziels (SPU-TU) bevorzugt an einer Dienstanbietereinheit (SPU) innerhalb des elektronischen Transaktionssystems (TS) gehostet ist.

8. Hardwaresichere Transaktionseinheit (TU) nach einem der vorhergehenden Ansprüche, die ferner umfasst:

   - ein Transceiver-Mittel (M) zum direkten Übertragen (15) von Token (T) mit anderen sicheren Transaktionseinheiten (TU) des elektronischen Transaktionssystems (TS), um einen Austausch des einen oder der mehreren Token (T) zwischen sicheren Transaktionseinheiten (TU) im elektronischen Transaktionssystem (TS) zu bewirken; und bevorzugt
   - ein Mittel zum Übertragen einer oder mehrerer Registrierungsanforderung(en) (RR) an ein Token-Referenzregister (T-Reg) des elektronischen Transaktionssystems (TS) als die Zentraleinheit (CU), wobei jede Registrierungsanforderung (RR) eine oder mehrere Token-Referenz(en) (TR) umfasst, wobei jede Token-Referenz (TR) eindeutig einem Token (T) im Transaktionssystem (TS) für elektronische Zahlungen zugewiesen ist; und mehr bevorzugt
   - dass das Steuermittel (CPU) ferner konfiguriert ist, um Protokolldaten (PROT) zu erzeugen, die sich auf Zahlungstransaktionen beziehen, die zwischen der sicheren Transaktionseinheit (TU) und anderen sicheren Transaktionseinheiten (TU) durchgeführt werden, wobei die Protokolldaten (PROT) an ein Protokolldatenregister (P-Reg) im Transaktionssystem (TS) für elektronische Zahlungen als die Zentraleinheit (CU) gesendet (32) werden.

9. Dienstanbietereinheit (SPU) als eine Zentraleinheit (CU) in einem elektronischen Transaktionssystem (TS), die umfasst:

   - eine oder mehrere Transaktionseinheit(en) eines online gehosteten Ziels (TU-O), die ein Speicherungsmittel (TSU) zum Speichern eines oder mehrerer Token (T) umfasst/umfassen;
   - eine Dienstanbietertransaktionseinheit (SPU-TU), die konfiguriert ist, um alle Token (T) zu empfangen (150), die in einem Speicherungsmittel (TSU) einer hardwaresicheren Transaktionseinheit (TU) gemäß einem der vorhergehenden Ansprüche gespeichert sind.

10. Dienstanbietereinheit (SPU) nach Anspruch 9, wobei die hardwaresichere Transaktionseinheit (TU) eindeutig einem Teilnehmer des elektronischen Transaktionssystems (TS) zugewiesen ist,

- wobei die sichere Transaktionseinheit eines Online-Ziels (SPU-TU) eine Transaktionseinheit (TU) ist, die demselben Teilnehmer zugewiesen ist.

11. Dienstanbietereinheit (SPU) nach Anspruch 9 oder 10, die ferner ein Blacklist-Register (BL) zum Registrieren eines Blacklist-Status jeweiliger Transaktionseinheiten (TU) umfasst, wobei die Transaktionseinheiten (TU) bevorzugt basierend auf einer eindeutigen Kennung (wID) der Transaktionseinheiten registriert werden, wobei die Transaktionseinheiten (TU) mehr bevorzugt durch die Dienstanbietereinheit (SPU) verwaltet und/oder ausgegeben werden.

12. Elektronisches Transaktionssystem (TS), das umfasst:

- eine Vielzahl hardwaresicherer Transaktionseinheiten (TU) nach einem der vorhergehenden Ansprüche 1 bis 8;
- eine oder mehrere Dienstanbietereinheit(en) (SPU) nach einem der vorhergehenden Ansprüche 9 bis 11;
- eine Zentraleinheit (CU), die bevorzugt eine der Dienstanbietereinheiten (SPU) ist, wobei die Zentraleinheit konfiguriert ist zum:
- Herstellen (30) einer Online-Kommunikation mit einer der Vielzahl von Transaktionseinheiten (TU);
- Übertragen (33) eines Blacklist-Status als Reaktion auf die hergestellte Online-Kommunikation an die eine der Vielzahl von Transaktionseinheiten (TU).

13. Elektronisches Transaktionssystem (TS) nach Anspruch 12, wobei die Zentraleinheit (CU) ferner konfiguriert ist zum:

- Anfordern (40) des Blacklist-Status von einem Blacklist-Register (BL) des elektronischen Transaktionssystems (TS), wobei das Blacklist-Register (BL) bevorzugt ist:
- ein zentralisiertes Blacklist-Register (BL) innerhalb des elektronischen Transaktionssystems (TS);
- ein Blacklist-Register (BL) einer oder mehrerer Dienstanbietereinheit(en) (SPU), die die eine der Vielzahl der sicheren Transaktionseinheiten (TU) ausgibt/ausgeben und/oder verwaltet/verwalten;
- nach einem Empfangen (50) des Blacklist-Status vom Blacklist-Register (BL), Erzeugen, mittels eines Befehlsgenerators (CO), eines Befehls zum automatischen Übertragen (150) aller Token (T), die aktuell in einem Speicherungsmittel (TSU) der einen der Vielzahl von Transaktionseinheiten (TU) gespeichert sind, an eine sichere Transaktionseinheit (TU) eines online gehosteten Ziels, wenn der Blacklist-Status erfüllt ist;
- wobei bevorzugt der Befehl ferner Informationen über die sichere Transaktionseinheit eines Online-Ziels (SPU-TU) umfasst, an die alle Token (T) automatisch übertragen (150) werden.

14. Elektronisches Transaktionssystem (TS) nach einem der vorhergehenden Ansprüche 12 bis 13, wobei die Zentraleinheit (CU) mindestens eines von Folgendem ist:

- eine Dienstanbietereinheit (SPU), die einen oder mehrere Dienst(e) für die eine der Vielzahl von Transaktionseinheiten (TU) bereitstellt;
- eine Dienstanbietereinheit (SPU), die die eine der Vielzahl von Transaktionseinheiten (TU) ausgibt;
- eine Token-Ausgabeeinheit;
- ein Blacklist-Register (BL);
- ein Zertifikatwiderrufsregister (CRR);
- ein oder mehrere Token-Register (T-Reg) zum Registrieren von Token (T) im elektronischen Transaktionssystem (TS);
- ein oder mehrere Protokolldatenregister (P-Reg) zum Speichern von Protokolldaten von Transaktionen, die zwischen sicheren Transaktionseinheiten (TU) durchgeführt werden.

15. Elektronisches Transaktionssystem (TS) nach einem der vorhergehenden Ansprüche 12 bis 14, wobei ein Blacklist-Status auf Anforderung eines Teilnehmers, dem die eine der Vielzahl von Transaktionseinheiten eindeutig zugewiesen ist, geändert wird, wobei der Blacklist-Status erfüllt ist, wenn die eine der Vielzahl von Transaktionseinheiten (TU) gestohlen wird oder verloren geht.

**Revendications**

1. Unité matérielle de transaction sécurisée (TU) dans un système de transaction électronique (TS), l'unité matérielle de transaction sécurisée (TU) comprenant :

des moyens de stockage (TSU) ; et
des moyens de commande (CPU) configurés pour :

- établir (30) une communication en ligne avec une unité centrale (CU) du système de transaction électronique de paiement (TS) ; et
- recevoir (33) un statut de liste noire en réponse à la communication en ligne établie ;
- transmettre (150) automatiquement des données, si le statut de liste noire est satisfait ;

**caractérisée en ce que**
l'unité matérielle de transaction sécurisée (TU) est un élément sécurisé, une carte à puce ou un module matériel de sécurité ;
les moyens de stockage (TSU) sont configurés pour stocker un ou plusieurs jetons (T) du système de transaction électronique (TS), où, dans le système de transaction électronique (TS), des unités de transaction sécurisées (TU) du système de transaction électronique (TS) échangent des jetons (T) ;
tous les jetons (T) qui sont actuellement stockés dans les moyens de stockage (TSU) sont transmis (150) en tant que données ; et
les jetons (T) sont transmis (150) de l'unité matérielle de transaction sécurisée (TU) à une unité de transaction sécurisée cible hébergée en ligne (TU) du système de transaction électronique (TS).

2. Unité matérielle de transaction sécurisée (TU) selon la revendication 1, dans laquelle le statut de liste noire est reçu (33) sous la forme d'une commande provenant de l'unité centrale (CU), où, sur la base de la commande reçue, la transmission automatique (150) est initiée directement (151).

3. Unité matérielle de transaction sécurisée (TU) selon la revendication 2, dans laquelle la commande comprend en outre des informations concernant l'unité de transaction sécurisée cible en ligne (SPU-TU) à laquelle tous les jetons (T) sont automatiquement transmis (150).

4. Unité de transaction matérielle sécurisée selon la revendication 1, dans laquelle le statut de liste noire est reçu (33) en tant qu'informations provenant de l'unité centrale (CU), où les moyens de commande (CPU) sont en outre configurés pour :

- vérifier (152) l'information indiquant si le statut de liste noire est satisfait ; et
- si le statut de liste noire est satisfait, générer une commande d'initialisation (151) de la transmission automatique (150).

5. Unité matérielle de transaction sécurisée (TU) selon l'une quelconque des revendications précédentes, comprenant en outre des informations concernant l'unité de transaction sécurisée cible en ligne (SPU-TU) à laquelle tous les jetons (T) sont automatiquement transmis (150), où, avant la transmission automatique (150), le moyen de commande (CPU) est en outre configuré pour récupérer (153) ces informations.

6. Unité matérielle de transaction sécurisée (TU) selon l'une quelconque des revendications précédentes, dans laquelle la transmission automatique (150) se produit sans autre interaction de l'utilisateur ou entrée de l'utilisateur ou acceptation de l'utilisateur.

7. Unité matérielle de transaction sécurisée (TU) selon l'une quelconque des revendications précédentes,

- dans laquelle l'unité de transaction sécurisée (TU) est affectée de manière unique à un participant du système de transaction électronique (TS),
- dans laquelle l'unité de transaction sécurisée cible en ligne (SPU-TU) est une unité de transaction (TU) attribuée au même participant, l'unité de transaction sécurisée cible en ligne (SPU-TU) est de préférence hébergée au niveau d'une unité de fournisseur de services (SPU) dans le système de transaction électronique (TS).

8. Unité matérielle de transaction sécurisée (TU) selon l'une quelconque des revendications précédentes, comprenant en outre :

- des moyens émetteurs-récepteurs (M) pour transférer directement (15) des jetons (T) avec d'autres unités de transaction sécurisées (TU) du système de transaction électronique (TS) pour provoquer un échange des un ou plusieurs jetons (T) entre des unités de transaction sécurisées (TU) dans le système de transaction électronique (TS) ; et de préférence

- des moyens pour transmettre une ou plusieurs demandes d'enregistrement (RR) à un registre de référence de jeton (T-Reg) du système de transaction électronique (TS) en tant qu'unité centrale (CU), chaque demande d'enregistrement (RR) comprenant une ou plusieurs références de jeton (TR), chaque référence de jeton (TR) étant attribuée de manière unique à un jeton (T) dans le système de transaction de paiement électronique (TS) ; et, plus préférablement

- les moyens de commande (CPU) sont configurés en outre pour générer des données de protocole (PROT) relatives à des transactions de paiement effectuées entre l'unité de transaction sécurisée (TU) et d'autres unités de transaction sécurisée (TU), où les données de protocole (PROT) sont envoyées (32) à un registre de données de protocole (P-Reg) dans le système électronique de transaction de paiement (TS) en tant qu'unité centrale (CU).

9. Unité de fournisseur de services (SPU) en tant qu'unité centrale (CU) dans un système de transaction électronique (TS) comprenant :

- une ou plusieurs unités de transaction cibles hébergées en ligne (TU-O) comprenant des moyens de stockage (TSU) pour stocker un ou plusieurs jetons (T) ;
- une unité de transaction de fournisseur de services (SPU-TU) configurée pour recevoir (150) tous les jetons (T) stockés dans des moyens de stockage (TSU) d'une unité de transaction matérielle sécurisée (TU) selon l'une quelconque des revendications précédentes.

10. Unité de fournisseur de services (SPU) selon la revendication 9, où l'unité matérielle de transaction sécurisée (TU) est assignée de manière unique à un participant du système de transaction électronique (TS),

- où l'unité de transaction sécurisée cible en ligne (SPU-TU) est une unité de transaction (TU) qui est assignée au même participant.

11. Unité de fournisseur de services (SPU) selon la revendication 9 ou la revendication 10, comprenant en outre un registre de liste noire (BL) pour enregistrer un statut de liste noire d'unités de transaction respectives (TU), les unités de transaction (TU) étant de préférence enregistrées sur la base d'un identifiant unique (wID) des unités de transaction ; les unités de transaction (TU) étant de préférence gérées et/ou émises par l'unité de fournisseur de services (SPU).

12. Système de transaction électronique (TS) comprenant :

- une pluralité d'unités matérielles de transaction sécurisée (TU) selon l'une quelconque des revendications précédentes 1 à 8 ;
- une ou plusieurs unités de fournisseur de services (SPU) selon l'une quelconque des revendications précédentes 9 à 11 ;
- une unité centrale (CU), étant de préférence une des unités de fournisseur de services (SPU), l'unité centrale étant configurée pour :
- établir (30) une communication en ligne avec une de la pluralité d'unités de transactions (TU) ;
- transmettre (33) un statut de liste noire en réponse à la communication en ligne établie à l'unité de la pluralité d'unités de transaction (TU).

13. Système de transaction électronique (TS) selon la revendication 12, dans lequel l'unité centrale (CU) est en outre configurée pour :

- demander (40) le statut de liste noire depuis un registre de liste noire (BL) du système de transaction électronique (TS), le registre de liste noire (BL) étant de préférence :
- un registre centralisé de liste noire (BL) au sein du système électronique de transactions (TS) ;
- un registre de liste noire (BL) d'une ou plusieurs unités de fournisseur de services (SPU) émettant et/ou gérant l'unité parmi la pluralité d'unités de transaction sécurisée (TU) ;
- à la réception (50) du statut de liste noire en provenance du registre de liste noire (BL), générer, au moyen d'un générateur de commande (CO), une commande de transmission automatique (150) de tous les jetons (T) actuellement stockés dans des moyens de stockage (TSU) de l'unité de la pluralité d'unités de transaction (TU) à une unité de transaction sécurisée cible (TU) hébergée en ligne, si le statut de liste noire est satisfait,
- où, de préférence, la commande comprend en outre des informations concernant l'unité de transaction sécurisée cible en ligne (SPU-TU) à laquelle tous les jetons (T) sont automatiquement transmis (150).

14. Système de transaction électronique (TS) selon l'une quelconque des revendications précédentes 12 et 13, dans lequel l'unité centrale (CU) est au moins l'un des éléments suivants :

- une unité de fournisseur de services (SPU) fournissant un ou plusieurs services pour une unité de la pluralité d'unités de transaction (TU) ;
- une unité de fournisseur de services (SPU) délivrant l'unité de la pluralité d'unités de transaction (TU) ;
- une unité émettrice de jetons ;
- un registre de liste noire (BL) ;
- un registre de révocation de certificats (CRR) ;
- un ou plusieurs registres de jetons (T-Reg) pour enregistrer des jetons (T) dans le système de transaction électronique (TS) ;
- un ou plusieurs registres de données de protocole (P-Reg) pour stocker des données de protocole de transactions effectuées entre des unités de transaction sécurisées (TU).

15. Système de transaction électronique (TS) selon l'une quelconque des revendications précédentes 12 à 14, dans lequel un statut de liste noire est modifié à la demande d'un participant auquel l'une de la pluralité d'unités de transaction est assignée de manière unique, où le statut de liste noire est satisfait, si l'une de la pluralité d'unités de transaction (TU) est volée ou perdue.

TS

**Fig. 1**

**Fig. 2**

**Fig. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020100131860 A

- WO 2020212331 A1